# EUROPÄISCHE PATENTSCHRIFT

(11) **EP 1 830 134 B1**
(45) Veröffentlichungstag und Bekanntmachung des Hinweises auf die Patenterteilung: **28.01.2009**
(21) Anmeldenummer: 07011237.0
(22) Anmeldetag: 05.06.2003
(51) Int. Cl.: F24F 3/00, F24F 3/147, F24F 5/00, F25B 29/00, F25B 5/02

(54) **Vorrichtung zum Trocknen von Luft in Gebäuden insbesondere von Schwimmhallen**
Device for drying air in buildings, especially in indoor swimming pools
Dispositif pour secher l'air dans des batiments en particulier des piscines couvertes

(30) Priorität: 13.06.2002 DE 10226417
(43) Veröffentlichungstag der Anmeldung: 05.09.2007
(62) Teilanmeldung aus: 03759912.3
(73) Patentinhaber: Menerga GmbH, 45473 Mülheim an der Ruhr (DE)
(72) Erfinder: Doerk, Horst, 45219 Essen (DE)
(74) Vertreter: COHAUSZ DAWIDOWICZ HANNIG & SOZIEN

(56) Entgegenhaltungen:
- DE-A- 2 027 347
- DE-A- 2 402 347
- DE-B- 2 757 439
- US-A- 4 517 810

## Beschreibung

Die Erfindung betrifft eine Vorrichtung zum Trocknen von Luft in Gebäuden insbesondere in Schwimmhallen mit einer Kältemaschine (Wärmepumpe), die einen Verdichter, einen Kondensator, ein Expansionsventil und einen Verdampfer aufweist, wobei die aus dem Gebäudeinneren kommende feuchte warme Abluft durch den Verdampfer abgekühlt und entfeuchtet und danach durch den Kondensator wieder erwärmt und als Zuluft in das Gebäudeinnere zurückgeführt wird.

Aus der US 4,517,810 ist es bekannt, die Luft eines Schwimmbades durch eine Kältemaschine herunter zu kühlen und zu entfeuchten und danach wieder zu erwärmen. Diese bekannte Anlage arbeitet nicht exakt entsprechend der tatsächlichen Nutzung des Schwimmbades und der damit anfallenden Feuchtigkeit und Schadstoffe entfeuchtet und Frischluft zugeführt. Damit erfolgt ein erhöhter Energieaufwand.

Aufgabe der Erfindung ist es, eine Vorrichtung der eingangs genannten Art so zu verbessern, dass eine Entfeuchtung und insbesondere eine Frischluftzufuhr exakt nach den bestehenden Gegebenheiten im Gebäude insbesondere in der Schwimmhalle bei gesteigerter Kälteleistung erfolgt.

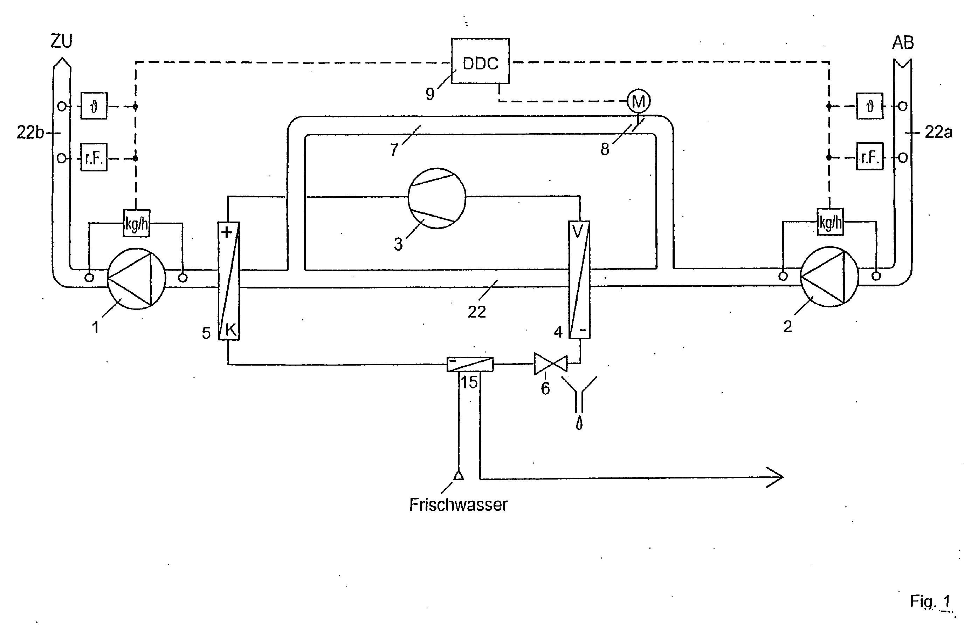

Diese Aufgabe wird erfindungsgemäß dadurch gelöst, dass im Kältemittelkreislauf der Kältemaschine vor dem Expansionsventil ein Kältemittelunterkühler angeordnet ist (Fig. 1), der zur Unterkühlung des flüssigen Kältemittels vor Einspritzung in den Verdampfer dient, und dass der Verdampfer von einem Bypass überbrückt ist und dass die durch den Bypass geführte Luftmenge durch ein im Bypass angeordnetes Absperrorgan entsprechend der Ablufttemperatur, der Abluftfeuchtigkeit, der Zulufttemperatur und der Zuluftfeuchtigkeit sowie der Abluftmenge und der Zuluftmenge steuerbar ist.

Dies führt zu einem erheblichen Leistungsgewinn bei einer Energieeinsparung. Besonders vorteilhaft ist eine solche Vorrichtung bei Schwimmhallen einsetzbar. Auch wird eine äußerst genaue Regelung der optimalen Entfeuchtungsleistung und insbesondere der aus hygienischen Gründen notwendigen Frischluftzufuhr bei erheblicher Energieeinsparung erreicht.

Eine weitere Steigerung des Leistungsgewinn bei erheblicher Energieeinsparung wird erreicht, wenn als Kühlmedium zum Kühlen des flüssigen Kältemittels das dem Gebäude insbesondere dem Schwimmbad zugeführte zu erwärmende Frischwasser verwendet wird.

Vorteilhafte Ausgestaltungen sind in den weiteren Unteransprüchen aufgeführt.

Ausführungsbeispiele der Erfindung sind in den Zeichnungen dargestellt und werden im folgenden näher beschrieben. Es zeigen
- Fig. 1: ein erstes Ausführungsbeispiel mit geregeltem Bypass und Kältemittelunterkühler,
- Fig. 2: ein zweites Ausführungsbeispiel mit Außenluftzufuhrkanal und Fortluftkanal,
- Fig. 3: ein drittes Ausführungsbeispiel mit zweiten Fortluftkanal,
- Fig. 4: ein viertes Ausführungsbeispiel mit zweiten Außenluftzufuhrkanal.

Es ist insbesondere bei Schwimmhallen bekannt, Luft mittels einer Kältemaschine zu entfeuchten. Hierzu wird die Abluft AB durch einen Ventilator 2 angesaugt, durch einen Hauptluftkanal 22 weitergeführt, behandelt und durch einen weiteren Ventilator 1 als Zuluft ZU wieder in den Raum (Räume) insbesondere in die Schwimmhalle zurückgeführt.

Die Kältemaschine besteht aus einem Verdichter 3, einem Verdampfer 4, einem Kondensator 5 und einem Expansionsventil 6. Die zu entfeuchtende bzw. zu trocknende Luft wird über den Ventilator 2 und den Kanal 22 durch den Verdampfer 4 geführt und dabei unterhalb ihres Taupunktes abgekühlt. Die abgekühlte und dabei getrocknete Luft wird danach mit ihrer eigenen, beim Abkühlen entzogenen Energie im Kondensator 5 wieder erwärmt. Die warme, trockene Luft wird mittels des Ventilators 1 dem Raum bzw. dem Objekt wieder zugeführt. Um diesen Prozess aufrecht zu erhalten, wird dem Verdichter 3 elektrische Energie zugeführt. Um den Entfeuchtungs- bzw. Trocknungsprozess besonders wirtschaftlich zu gestalten, ist es erforderlich, die elektrische Antriebsenergie für den Verdichter möglichst gering zu halten.

Um die elektrische Antriebsenergie für den Verdichter 3 gering zu halten, ist es bekannt, einen Wärmeübertrager mit dem Kältemaschinenprozess zu kombinieren. In dem Wärmeübertrager wird die zu trocknende Luft vorgekühlt, durch den nachfolgenden Verdampfer 4 auf Taupunkttemperatur abgekühlt, anschließend im Wärmeübertrager vorgewärmt und durch den Kondensator 5 weiter aufgewärmt.

Weiterhin ist es bekannt, durch Umgehen des Verdampfers 4 über einen Bypass mit Bypass-Klappe 8 die Aufnahmeleistung des Verdichters 3 bei gleichbleibender Entfeuchtungsleistung zu reduzieren. Es ist dabei festzustellen, dass es bei zu großer oder auch zu kleiner Luftmenge über diesen Bypass zu einer drastischen Reduzierung der Entfeuchtungsleistung kommt. Hierbei ist die Bypass-Schaltung auch in der Kombination mit einem Wärmeübertrager möglich.

Ein wesentlicher Bestandteil der Erfindung ist, dass die Luftmenge über dem Bypass so geregelt wird, dass immer eine größtmögliche Entfeuchtungsleistung gewährleistet wird (Fig. 1). Neu ist hierbei auch, dass mit Hilfe einer elektronischen Steuer- und Regelungseinheit sowohl die Ablufttemperatur und -feuchtigkeit als auch die Zulufttemperatur und -feuchtigkeit gemessen wird. Weiterhin wird die Abluftmenge und auch die Zuluftmenge messtechnisch erfasst. Hierzu sind am Abluftkanal 22a und am Zuluftkanal 22b jeweils mindestens zwei Sensoren angeordnet, die die Temperatur und die Feuchtigkeit der Luft im Kanal messen. Ferner wird hierzu über die Ventilatoren 1 und 2 jeweils die geförderte Luftmenge gemessen.

Mit Hilfe dieser Messwerte kann der absolute Feuchteunterschied zwischen Abluft und Zuluft permanent bestimmt werden. Die Feuchtedifferenz dient als Regelgröße für die elektromotorische Bypass-Klappe 8. Hierdurch wird gewährleistet, dass bei unterschiedlichen Betriebsbedingungen die jeweils optimale Luftmenge über den Verdampfer geführt wird. Dadurch wird ein optimales Verhältnis zwischen der Entfeuchtungsleistung zur Aufnahmeleistung des Verdichters erzielt.

Eine weitere Möglichkeit der Energieoptimierung besteht durch die Unterkühlung des flüssigen Kältemittels vor Einspritzung in den Verdampfer 4 (Fig. 1). Dazu wird unmittelbar vor dem Expansionsventil 6 ein Kältemittelunterkühler 15 integriert. Als Kühlmedium dient hier Frischwasser, das in einem Schwimmbad erfahrungsgemäß in großen Mengen benötigt wird und auch erwärmt werden muss (zum Beispiel Beckenwassernachspeisung, Duschen etc.).

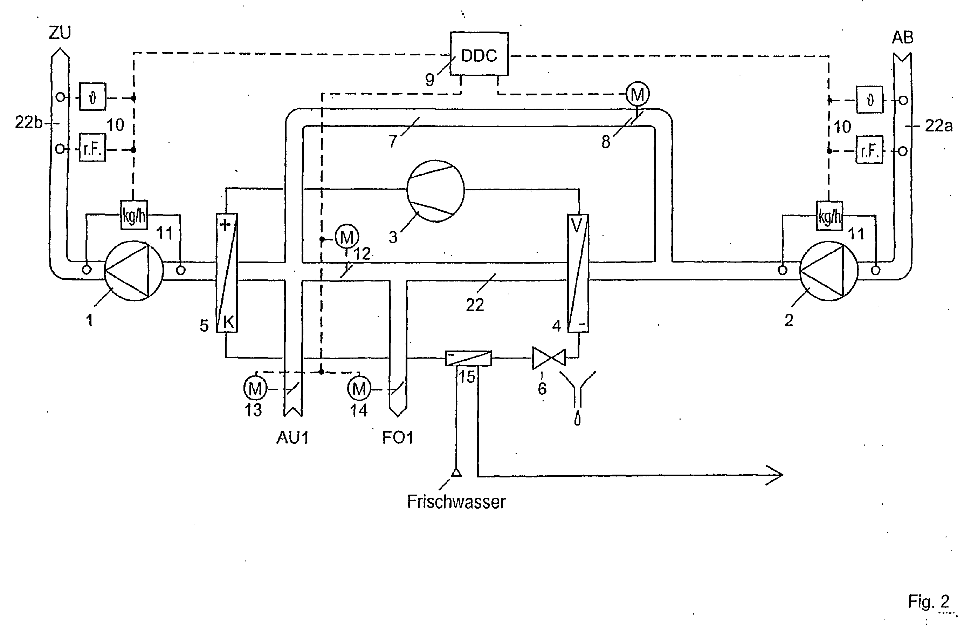

Da in einer Schwimmhalle ständig Schadstoffe freigesetzt werden (zum Beispiel Trihalogenmethane) ist es notwendig, einen bestimmten Außenluftanteil der Schwimmhalle über einen Zufuhrkanal AU1 zuzuführen (Fig. 2). Dieser hygienisch notwendige Außenluftanteil sollte der jeweiligen Nutzungsart des Bades angepasst sein. Die Menge der Schadstoffe ist, ähnlich wie beim Wasserdampf, abhängig von der Nutzungsart des Bades. Das heißt, geringe Nutzung des Bades bedeutet geringerer Schadstoffanteil bzw. Wasserdampfanteil, höhere Nutzung des Bades dagegen höherer Schadstoffanteil bzw. höherer Wasserdampfanteil. Da durch diese Erfindung die freigesetzte Wassermenge messtechnisch erfasst wird, dient diese als Regelgröße für die Bemessung der Zuführung des hygienisch notwendigen Außenluftvolumenstroms AU zur Schadstoffabfuhr bzw. -reduzierung. Die nach außen zu bringende Fortluft wird hierbei über einen Fortluftkanal nach außen abgegeben.

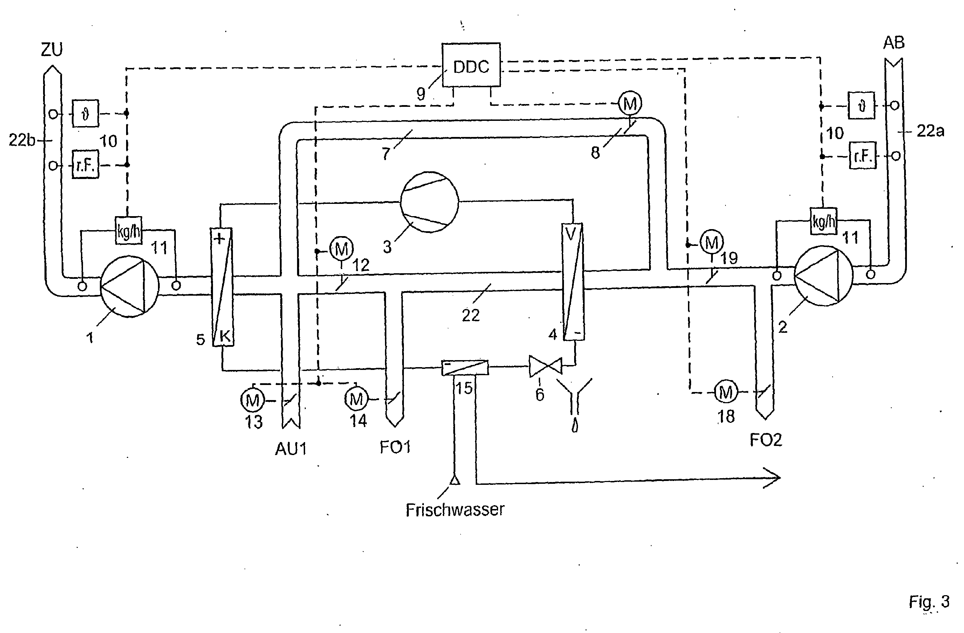

Um im Sommerbetrieb, wenn eine erhöhte Außenluftrate gebraucht wird und jeglicher Wärmerückgewinn unerwünscht ist, kann die im Fortluftweg befindliche Wärmetauscherkonfiguration durch einen zusätzlichen Fortluftanschluss F02 umgangen werden (Fig. 3). Zu diesem Zweck wird die Luftklappe 18 geöffnet und die Luftklappe 19 geschlossen.

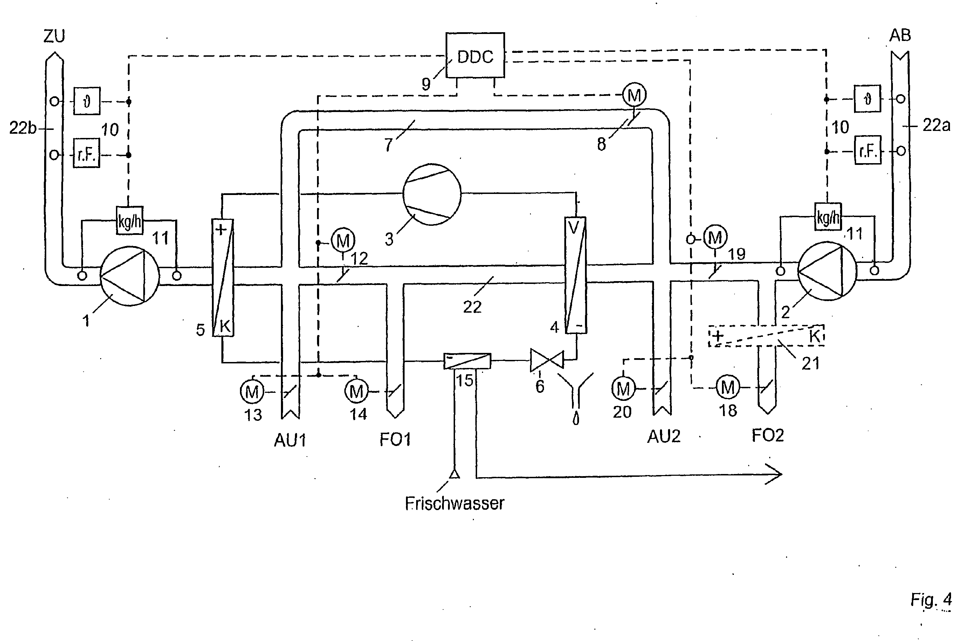

Wird die Außenluft im Sommer zu warm und vor allen Dingen zu feucht, kann die gewünschte Temperatur und Luftfeuchte in der Schwimmhalle häufig nicht mehr gehalten werden. Um eine behagliche Luftkonditionierung auch bei diesen Betriebsbedingungen möglich zu machen, wird die Außenluft über einen zusätzlichen Außenluftanschluss AU2 mit Luftklappe 20 angesaugt und mittels der Wärmetauscherkonfiguration abgekühlt und getrocknet (Fig. 4). Kommt es dabei zur Überheizung der Schwimmhallenluft kann über einen zusätzlichen Luftkondensator 21 Überschusswärme aus dem Entfeuchtungsprozess mit der Fortluft aus dem Objekt entfernt werden.

Um den Entfeuchtungs- bzw. Trocknungsprozess besonders wirtschaftlich zu gestalten, ist es erforderlich, die elektrische Antriebsenergie für den Verdichter möglichst gering zu halten. Es ist bekannt, dass hierfür Wärmeübertrager mit dem Kältemaschinenprozess kombiniert werden können.

Zusammengefasst beschreibt diese Erfindung ein selbst optimierendes Schwimmhallenlüftungsgerät. Dieses passt seine Betriebsweise an die jeweiligen Bedingungen an und wählt automatisch und selbstständig die energieeffizienteste Betriebsweise. Je nach Energiepreis bzw. Außenluftkonditionen kann es wirtschaftlicher sein, die Schwimmhalle mittels Außenluft anstelle des Wärmepumpenbetriebes zu entfeuchten. Durch Verwendung eines Rechenmoduls, welches alle Parameter inklusive der Außenluftkonditionen enthält, wird durch Eingabe der elektrischen und thermischen Energiepreise automatisch die wirtschaftlichste Betriebsweise gewählt.

Die beschriebene Funktion funktioniert auch in der Kombination einer Kältemaschine und einem Luft-Luftwärmeübertrager.

## Patentansprüche

1. Vorrichtung zum Trocknen von Luft in Gebäuden mit einer Kältemaschine (Wärmepumpe), die einen Verdichter (3), einen Kondensator (5), ein Expansionsventil (6) und einen Verdampfer (4) aufweist, wobei die aus dem Gebäudeinneren kommende feuchte warme Abluft (AB) durch den Verdampfer (4) abgekühlt und entfeuchtet und danach durch den Kondensator (5) wieder erwärmt und als Zuluft (ZU) in das Gebäudeinnere zurückgeführt wird, **dadurch gekennzeichnet, dass** im Kältemittelkreislauf der Kältemaschine vor dem Expansionsventil (6) ein Kältemittelunterkühler (15) angeordnet ist, der zur Unterkühlung des flüssigen Kältemittels vor Einspritzung in den Verdampfer (4) dient, dass der Verdampfer (4) von einem Bypass (7) überbrückt ist und dass die durch den Bypass (7) geführte Luftmenge durch ein im Bypass angeordnetes Absperrorgan (8) entsprechend der Ablufttemperatur, der Abluftfeuchtigkeit, der Zulufttemperatur und der Zuluftfeuchtigkeit sowie der Abluftmenge und der Zuluftmenge steuerbar ist.

2. Vorrichtung nach Anspruch 1, **dadurch gekennzeichnet, dass** als Kühlmedium zum Kühlen des flüssigen Kältemittels das dem Gebäude insbesondere dem Schwimmbad zugeführte zu erwärmende Frischwasser verwendet wird.

3. Vorrichtung nach einem der vorherigen Ansprüche, **dadurch gekennzeichnet, dass** in den Hauptluftkanal (22) zwischen Kondensator (5) und Verdampfer (4) ein Außenluftzufuhrkanal (AU1) mündet.

4. Vorrichtung nach einem der vorherigen Ansprüche, **dadurch gekennzeichnet, dass** von dem Hauptluftkanal (22) zwischen Kondensator (5) und Verdampfer (4), insbesondere vor der Abzweigung des Außenluftzufuhrkanals (AU1), ein Fortluftkanal (F01) abzweigt.

5. Vorrichtung nach einem der vorherigen Ansprüche, **dadurch gekennzeichnet, dass** in den Zufuhr- und/oder Fortluftkanälen Absperrorgane angeordnet sind.

6. Vorrichtung nach Anspruch 5, **dadurch gekennzeichnet, dass** hinter der Abzweigung des Fortluftkanals (F01) ein Absperrorgan (12) im Hauptluftkanal (22) angeordnet ist, durch das die abgeführte Fortluftmenge im Zusammenspiel der Absperrorgane (13, 14) in dem Fortluftkanal (F01) und in dem Außenluftkanal (AU1) steuerbar ist.

7. Vorrichtung nach einem der vorherigen Ansprüche, **dadurch gekennzeichnet, dass** von dem Hauptluftkanal (22) vor dem Verdampfer (4) und insbesondere vor der Bypassabzweigung ein zweiter Fortluftkanal (F02) abzweigt.

8. Vorrichtung nach Anspruch 7, **dadurch gekennzeichnet, dass** hinter der Abzweigung des zweiten Fortluftkanals ein Absperrorgan (19) angeordnet ist, durch das die abgeführte Fortluftmenge im Zusammenspiel mit dem Absperrorgan (18) im zweiten Fortluftkanal (F02) steuerbar ist.

9. Vorrichtung nach einem der vorherigen Ansprüche, **dadurch gekennzeichnet, dass** in dem Hauptluftkanal (22) vor dem Verdampfer (4) und insbesondere hinter der zweiten Fortluftkanalabzweigung ein zweiter Außenluftzufuhrkanal (AU2) mündet.

10. Vorrichtung nach einem der Ansprüche 7 bis 9, **dadurch gekennzeichnet, dass** zwischen der Mündung des zweiten Außenluftzufuhrkanals (AU2) und der Abzweigung des zweiten Fortluftkanals (F02) ein Absperrorgan (19) in dem Hauptluftkanal (22) angeordnet ist (Fig. 4), der zusammenarbeitet mit den Absperrorganen (18, 20) in den zweiten Fortluft- und Außenluftkanälen (F02, AU2).

11. Vorrichtung nach einem Ansprüche 7 bis 10, **dadurch gekennzeichnet, dass** in dem zweiten Fortluftkanal (F02) ein Luftkondensator (21) angeordnet ist.

12. Vorrichtung nach einem der vorherigen Ansprüche, **dadurch gekennzeichnet, dass** die Absperrorgane von Klappen gebildet sind.

13. Vorrichtung nach einem der vorherigen Ansprüche, **dadurch gekennzeichnet, dass** die Absperrorgane insbesondere die Klappen motorisch betrieben sind.

14. Vorrichtung nach einem der vorherigen Ansprüche, **dadurch gekennzeichnet, dass** die Messvorrichtungen, die die Temperaturen, die Feuchtigkeit und insbesondere die Luftmengen erfassen sowie die Antriebe insbesondere Motoren der Absperrorgane an eine elektronische Regelvorrichtung angeschlossen sind, die die Absperrorgane entsprechend den gemessenen Werten steuert.

15. Vorrichtung nach einem der vorherigen Ansprüche, **dadurch gekennzeichnet, dass** zur Kombination eines Wärmeübertragers mit dem Kältemaschinenprozess ein Wärmeübertrager im Hauptkanal (22) derart angeschlossen ist, dass in dem Wärmeübertrager (16) die zu trocknende Luft vorgekühlt wird, durch den nachfolgenden Verdampfer (4) auf Taupunkttemperatur abgekühlt wird und anschließend im Wärmeübertrager vorgewärmt und durch den Kondensator (5) weiter aufgewärmt wird.

## Claims

1. Device for drying air in buildings with a refrigerating machine (heat pump), which has a compressor (3), a condenser (5), an expansion valve (6) and a vaporiser (4), in which the warm, humid exhaust air (AB) coming from inside the building is cooled down and dehumidified by the vaporiser (4) and then heated again and taken back inside the building as supply air (ZU), **characterised in that** a refrigerant subcooler (15) is arranged in the refrigerant circuit of the refrigerating machine in front of the expansion valve (6), which serves to subcool the liquid refrigerant before spraying into the vaporiser (4), that the vaporiser (4) is bypassed by a bypass (7) and that the amount of air taken through the bypass (7) is controllable through a shutoff device (8) arranged in the bypass according to the temperature of the exhaust air, the humidity of the exhaust air, the temperature of the supply air and the humidity of the supply air as well as the amount of exhaust air and the amount of supply air.

2. Device according to claim 1, **characterised in that** the fresh water to be heated, which is supplied to the building, particularly the swimming pool, is used as a cooling medium for cooling the liquid refrigerant.

3. Device according to one of the previous claims, **characterised in that** an outside air supply channel (AU1) comes out in the main air channel (22) between the condenser (5) and the vaporiser (4).

4. Device according to one of the previous claims, **characterised in that** an outgoing air channel (F01) branches off from the main air channel (22) between the condenser (5) and the vaporiser (4), particularly before the junction of the outside air supply channel (AU1).

5. Device according to one of the previous claims, **characterised in that** shutoff devices are arranged in the supply and/or outgoing air channels.

6. Device according to claim 5, **characterised in that** a shutoff device (12) is arranged in the main air channel (22) behind the junction of the outgoing air channel (F01), through which the amount of outgoing air taken off in the interaction of the shutoff devices (13, 14) in the outgoing air channel (F01) and in the outside air channel (AU1) may be controlled.

7. Device according to one of the previous claims, **characterised in that** a second outgoing air channel (F02) branches off from the main air channel (22) before the vaporiser (4) and particularly before the bypass junction.

8. Device according to claim 7, **characterised in that** a shutoff device (19) is arranged behind the junction of the second outgoing air channel, through which the amount of outgoing air taken off in the interaction of the shutoff device (18) in the second outgoing air channel (F02) may be controlled.

9. Device according to one of the previous claims, **characterised in that** a second outside air supply channel (AU2) comes out in the main air channel (22) in front of the vaporiser (4) and particularly behind the second outgoing air channel junction.

10. Device according to one of claims 7 to 9, **characterised in that** a shutoff device (19) is arranged in the main air channel (22) between the outlet of the second outside air supply channel (AU2) and the junction of the second outgoing air channel (F02) (figure 4), which works together with the shutoff devices (18, 20) in the second outgoing air and outside air channels (F02, AU2).

11. Device according to one of claims 7 to 10, **characterised in that** an air condenser (21) is arranged in the second outgoing air channel (F02).

12. Device according to one of the previous claims, **characterised in that** the shutoff devices are formed by valves.

13. Device according to one of the previous claims, **characterised in that** the shutoff devices, particularly the valves, are motor driven.

14. Device according to one of the previous claims, **characterised in that** the measuring devices, which record the temperatures, the humidity and particularly the amounts of air as well as the drives, particularly the motors, of the shutoff devices, are connected to an electronic control device, which controls the shutoff devices according to the measured values.

15. Device according to one of the previous claims, **characterised in that** to combine a heat exchanger with the refrigerating machine process a heat exchanger is connected in the main channel (22) in such a way that the air to be dried is precooled in the heat exchanger (16), cooled down to dew point temperature by the subsequent vaporiser (4) and then preheated in the heat exchanger and heated up again by the condenser (5).

## Revendications

1. Dispositif pour sécher l'air dans des bâtiments avec une machine frigorifique (pompe à chaleur), qui comprend un compresseur (3), un condenseur (5), une soupape de détente (6) et un évaporateur (4), l'air sortant (AB) chaud humide, provenant de l'intérieur du bâtiment, étant refroidi et déshumidifié par l'évaporateur (4), puis réchauffé par le condenseur (5) et recyclé en tant qu'air frais (ZU) dans l'intérieur du bâtiment, **caractérisé en ce que**, dans le circuit de frigorigène de la machine frigorifique, un sous-refroidisseur de frigorigène (15) est disposé en amont de la soupape de détente (6), lequel sous-refroidisseur sert au sous-refroidissement du frigorigène fluide avant son injection dans l'évaporateur (4), que l'évaporateur (4) est ponté par un bipasse (7), et que la quantité d'air, guidée au travers du bipasse (7), est réglable par un organe d'arrêt (8), disposé dans le bipasse, suivant la température de l'air sortant, l'humidité de l'air sortant, la température de l'air frais et l'humidité de l'air frais, ainsi que de la quantité d'air sortant et de la quantité d'air frais.

2. Dispositif suivant la revendication 1, **caractérisé en ce que** l'eau fraîche à réchauffer envoyée dans le bâtiment, en particulier dans la piscine, est utilisée en tant qu'agent de refroidissement pour refroidir le frigorigène fluide.

3. Dispositif suivant l'une des revendications précédentes, **caractérisé en ce qu'**un canal d'alimentation en air extérieur (AU1) débouche dans le canal d'air principal (22) entre le condenseur (5) et l'évaporateur (4).

4. Dispositif suivant l'une des revendications précédentes, **caractérisé en ce qu'**un canal d'air d'échappement (FO1) part en dérivation du canal d'air principal (22) entre le condenseur (5) et l'évaporateur (4), en particulier en amont de l'embranchement du canal d'alimentation en air extérieur (AU1).

5. Dispositif suivant l'une des revendications précédentes, **caractérisé en ce que** des organes d'arrêt sont disposés dans les canaux d'arrivée d'air et/ou d'air d'échappement.

6. Dispositif suivant la revendication 5, **caractérisé en ce qu'**un organe d'arrêt (12) est disposé dans le canal d'air principal (22) en arrière de la dérivation du canal d'air d'échappement (FO1), organe par lequel est réglable la quantité d'air d'échappement dissipée en combinaison avec les organes d'arrêt (13, 14) dans le canal d'air d'échappement (FO1) et dans le canal d'air extérieur (AU1).

7. Dispositif suivant l'une des revendications précédentes, **caractérisé en ce qu'**un second canal d'air d'échappement (F02) part en dérivation du canal d'air principal (22) en amont de l'évaporateur (4) et en particulier en amont de la dérivation de bipasse.

8. Dispositif suivant la revendication 7, **caractérisé en ce qu'**un organe d'arrêt (19) est disposé en arrière de la dérivation du second canal d'air d'échappement, organe par lequel la quantité d'air d'échappement dissipée est réglable en combinaison avec l'organe d'arrêt (18) dans le second canal d'air d'échappement (F02).

9. Dispositif suivant l'une des revendications précédentes, **caractérisé en ce qu'**un second canal d'alimentation en air extérieur (AU2) débouche dans le canal d'air principal (22) en amont de l'évaporateur (4) et en particulier en arrière de la seconde dérivation de canal d'air d'échappement.

10. Dispositif suivant l'une des revendications 7 à 9, **caractérisé en ce qu'**un organe d'arrêt (19) est disposé dans le canal d'air principal (22) entre le débouché du second canal d'alimentation en air extérieur (AU2) et la dérivation du second canal d'air d'échappement (FO2) (figure 4), lequel organe coopère avec les organes d'arrêt (18, 20) dans les seconds canaux d'air d'échappement et d'air extérieur (FO2, AU2).

11. Dispositif suivant l'une des revendications 7 à 10, **caractérisé en ce qu'**un condenseur à air (21) est disposé dans le second canal d'air d'échappement (F02).

12. Dispositif suivant l'une des revendications précédentes, **caractérisé en ce que** les organes d'arrêt sont formés par des clapets.

13. Dispositif suivant l'une des revendications précédentes, **caractérisé en ce que** les organes d'arrêt, en particulier les clapets, sont motorisés.

14. Dispositif suivant l'une des revendications précédentes, **caractérisé en ce que** les dispositifs de mesure, qui détectent les températures, l'humidité et en particulier les quantités d'air, ainsi que les commandes, en particulier les moteurs des organes d'arrêt, sont raccordés à un dispositif de réglage électronique, qui règle les organes d'arrêt en conformité avec les valeurs mesurées.

15. Dispositif suivant l'une des revendications précédentes, **caractérisé en ce que**, pour la combinaison d'un échangeur de chaleur avec le processus de la machine frigorifique, un échangeur de chaleur est raccordé dans le canal principal (22) de telle sorte que l'air à sécher est pré-refroidi dans l'échangeur de chaleur (16), est refroidi par l'évaporateur aval (4) au point de rosée, puis est préchauffé dans l'échangeur de chaleur et réchauffé par le condenseur (5).
